# EUROPEAN PATENT APPLICATION

(11) **EP 2 555 419 A2**
(43) Date of publication of application: **06.02.2013**
(21) Application number: 12179183.4
(22) Date of filing: 03.08.2012
(51) Int. Cl.: H02P 9/00, G06F 11/16, G05B 23/02

(54) **Generator regulating system and method with dual controllers**

(30) Priority: 05.08.2011 US 201113204325
(71) Applicant: General Electric Company, Schenectady, NY 12345 (US)
(72) Inventor: Pearson, William Robert, Salem, VA 24153 (US); Casteel, Jordan Brantley, Salem, VA 24153 (US)
(74) Representative: Picker, Madeline Margaret

(57) **Abstract**

A regulating system (100) can include a first controller configured to receive analog input (105, 106) and discrete input (110, 11), a second controller communicatively coupled to the first controller, and configured to receive analog input (105, 106) and discrete input (110, 111), a selector (150) communicatively coupled to the first controller and second controller and configured to select either one of the first controller and the second controller as a master for the regulating system (100) and state logic residing on each of the first controller and second controller to determine which of the first and second controller is the master.

## Description

### BACKGROUND OF THE INVENTION

The subject matter disclosed herein relates to generator control, and more particularly to a dual controller generator regulating system.

Generator systems have redundant controllers so that the systems have a master and back up controller at any given time. An approach for a high performance redundancy design is a triple modular redundancy (TMR) system. In a TMR system, the values of the sensed signals from the generator are communicated among the redundant controllers. Therefore, each controller in a TMR system may have two inter-controller communication channels. Furthermore, since the amount of hardware is greater in a TMR system compared to a single or dual controller system, the mean time between component failures (MTBF) is expected to be shorter. Notwithstanding the above, time between system failure can remain high if associated maintenance (such as in operation repair) is performed.

In a typical TMR system, two master controllers include a full compliment of control and power electronics. As such, each controller can perform the regulatory needs for generator control such as automatic (terminal) voltage regulation, limiters (such as Volts/Hz, UEL) and protection (such as high voltage trip). A third controller does not perform any regulation and does not control any power electronics, but is able to instrument such signals as stator potential transformers (PTs) and stator current transformers (CTs), and regulator bridge voltage and current in the same manner as the masters. The third controller can also measure discrete inputs such as general-purpose contact inputs, specific inputs. As such the third controller is able to form a third opinion of a signal, the other two options being from the master controllers.

Although the third controller is without power electronics, it can increase the cost, volume and power consumption of the overall system.

### BRIEF DESCRIPTION OF THE INVENTION

According to one aspect of the invention, a regulating system is described. The system can include a first controller configured to receive analog input and discrete input, a second controller communicatively coupled to the first controller, and configured to receive analog input and discrete input, a selector communicatively coupled to the first controller and second controller and configured to select either one of the first controller and the second controller as a master for the regulating system and state logic residing on each of the first controller and second controller to determine which of the first and second controller is the master.

According to another aspect of the invention, a method for transferring state machine logic in a regulating system is described. The method can include in response to being a master of the system and having analog inputs, detecting an unhealthy status, communicating the unhealthy status to a backup controller and to a selector that switches the backup controller to a backup status and a master status, in response to being a backup of the system and receiving an unhealthy status from the backup controller, requesting to become a master of the system and in response to being a backup of the system, identifying that the analog inputs agree with analog inputs for a master of the system, and identifying an out of boundary conditions of the analog inputs and the analog inputs of the master for the system, requesting to become master of the system.

According to yet another aspect of the invention, a computer program product for transferring state machine logic in a regulating system is described. The computer program product can include a non-transitory computer readable medium storing instructions for causing a computer to implement a method. The method can include in response to being a master of the system and having analog inputs, detecting an unhealthy status, communicating the unhealthy status to a backup controller and to a selector that switches the backup controller to a backup status and a master status, in response to being a backup of the system and receiving an unhealthy status from the backup controller, requesting to become a master of the system and in response to being a backup of the system, identifying that the analog inputs agree with analog inputs for a master of the system, and identifying an out of boundary conditions of the analog inputs and the analog inputs of the master for the system, requesting to become master of the system.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 illustrates a block diagram of an example dual controller generator regulating system.
FIG. 2 illustrates a state diagram depicting transfer state machine logic in accordance with example embodiments.
FIG. 3 illustrates a state diagram depicting selector state machine logic in accordance with example embodiments.
FIG. 4 illustrates an example embodiment of a system 400 that can be implemented with example dual controllers.

The detailed description explains embodiments of the invention, together with advantages and features, by way of example with reference to the drawings.

### DETAILED DESCRIPTION OF EMBODIMENTS OF THE INVENTION

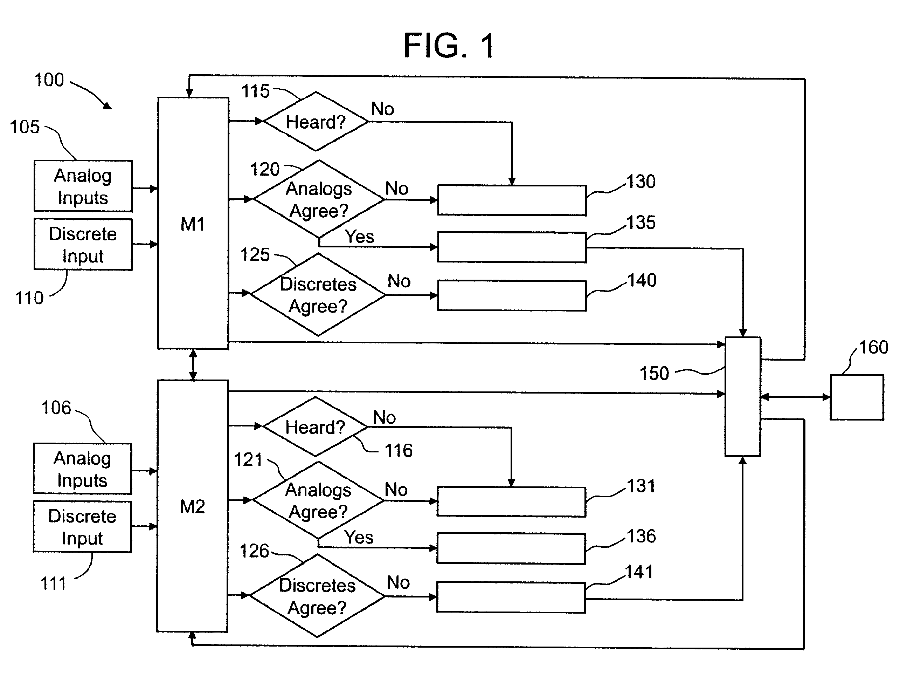

FIG. 1 illustrates a block diagram of an example dual controller generator regulating system 100. In example embodiments, the system 100 includes controllers M1, M2. Each controller M1, M2 includes a processing device that communicates bidirectionally over a communication link for state exchange. As described further herein, the system 100 provides the redundancy performance of three controllers but with only the two controllers. Each of the controllers M1, M2 receives generator signals from various components of a generator system, including but not limited to generator stator values, generator field values, and regulator values. Generator stator values can include but are not limited to: 1) Generator voltages from PTs (Vmag); 2) Line voltages from PTs (Xmag); 3) Generator currents from CT's (Imag); and 4) other signals of choice such as Watts or volt-ampere reactive (VARs). Generator field values can include but are not limited to: 1) Field Current (Vfld); 2) Field Voltage (Ifld). Regulator values can also include, but are not limited to: Regulator Current (Ireg) and Regulator Voltage (Vreg). These analog values are included as inputs 105,106.

In example embodiments, the controllers M1, M2 can also independently measure a multiplicity of general-purpose discrete inputs and specific function discrete inputs 110, 111. For example, specific function inputs can be 52G and 86G as the generator tie-line breaker and lockout relay status inputs, respectively.

In example embodiments, the system 100 includes various logic and algorithms for health determination and resides in the controllers M1, M2. The system 100 can send receive and compare signals such as the inputs 105, 106, 110, 111. Comparison can be performed via exchange of state information between the controllers M1, M2. The system can also resolved differences and determines which of the controllers M1, M2 that is designated as master has a healthy measurement of the signals. Upon a signal disagreement as a result of an individual controller sensor failure, and without an additional opinion of a signal that can be provided by a third controller, the system 100 resolves signal disagreements by software algorithm and places the healthy controller in control of the regulating system. The system 100 further includes a state machine that holds the operating mode of the controller (such as active master or backup modes) as further described herein.

In example embodiments, the system 100 further includes an analog problem resolver 130, 131 for each of the controllers M1, M2. Since there are only two opinions of a measured signal of the analog inputs 105, 106 (such as Ireg), the system 100 determines signal health should there be disagreement between a specific signal as measured by M1 and M2. The analog problem resolvers 130, 131 therefore generate a third opinion to determine which of the analog inputs 105, 106 is the correct signal. In example embodiments, the analog problem resolvers 130, 131 can generate the third opinion based on calculated and theoretical values rather than actual measured valued. The third opinion is only calculated if the controllers M1, M2 can communicate the appropriate information to each other. The system can also include boundary transfer logic 135, 136 for each of the controllers M1, M2. Supplementing specific health signals is a protective transfer scheme that takes a macroscopic view of the system 100. The boundary transfer logic 135, 136 includes generator protective transfer relays (i.e., via software) that request a system transfer based on out-of-bounds operating conditions. This function is only performed in back-up master if the analog inputs 105, 106 (such as generator stator signals) agree. In this way, the boundary transfer logic 135, 136 passes the analog inputs 105, 106 to the rest of the system 100 and the generator system when it is determined that the analog inputs 105, 105 are correct. The system can also include application decision logic 140, 141, which resolves the discrete inputs 110, 111. Those inputs that have specific (dedicated usage) can use other system information to resolve the correct state of an input if there is a discrepancy from the measurements.

In example embodiments, the system 100 can include various decision logic disposed between the controllers M1, M2 and the respective analog problem resolver 130, 131, boundary transfer logic 135, 136, and application decision logic 140, 141. The system can include decision logic 115, 116 to determine if the respective controller M1, M2 has been heard. This decision logic aids in whether or not the respective analog problem resolver 130, 131 can rely on a measured analog input 105, 106. The system 100 can further include decision logic 120, 121 to determine whether or not the analog inputs 105, 106 agree as discussed above. If the analog inputs 105, 106 agree, then the analog problem resolvers 130, 131 are not accessed, and the boundary transfer logic 135, 136 is accessed as described herein. If the analog inputs 105, 106 do not agree, then the analog problem resolvers 130, 131 are accessed as described herein. The system 100 can further include decision logic to determine if the discrete inputs 110, 111 agree. As described herein, if they do not agree, then the application decision logic 140, 141 is accessed.

As described herein, the controllers M1, M2 each include state machines and transfer state information between each other. If one of the controllers M1, M2 finds that an input or internal signal is not healthy (such as by the Analog Problem Resolver 130, 131), the appropriate controller M1, M2 communicates the unhealthy to the other of the controllers M1, M2. When one of the controllers M1, M2 receives information that the other controller M1, M2 (i.e., its peer) is not healthy, the appropriate controller M1, M2 requests to become the system master. If one of the controllers M1, M2 is not the system master and analog inputs agree and an out of boundary condition occurs, the appropriate controller M1, M2 requests to become the system master.

In example embodiments, the system 100 further includes a selector device 150 communicatively coupled to the controllers M1, M2. The selector device 150 controls a power relay 160 that ultimately connects either M1 or M2 to the exciter field of the generator system. The selector device 150 status is communicated to the controllers M1, M2. As such, the controllers M1, M2 can determine their primary role (either active master or back-up) by knowledge of the selector status.

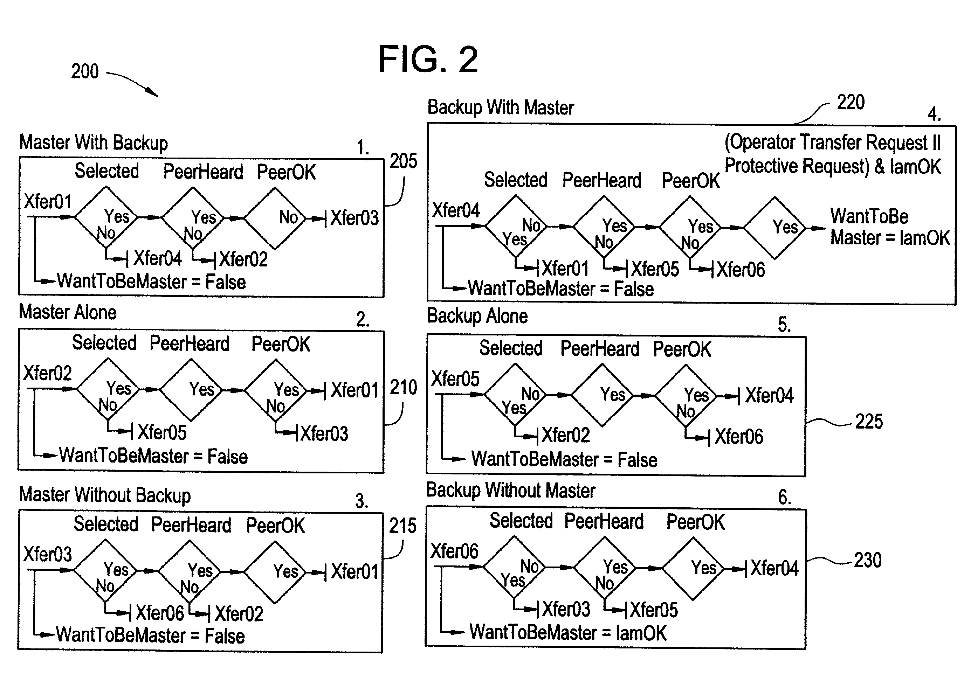

FIG. 2 illustrates a state diagram 200 depicting transfer state machine logic in accordance with example embodiments. As described herein, each controller M1, M2 includes a state machine to supplement controller activity. Each controller M1, M2 is either in a master or a back-up mode. However, the logic is further refined into additional states. If selected, the controller is a master as reflected in states 205, 210, 215, and if not selected, the controller is a back up state as reflected in states 220, 225, 230. The state of the controller may change based on the logic in FIG. 2. State transitions are made if the conditions of the overall system 100 change. For example, a transition from state 205 to state 210 is made if a controller does not hear (is not communicating) to the other controller (its peer). State 220 is a primary transfer exchange through which mastership is changed. For example, in state 220, the one of the controllers M1, M2 is a backup and requests to become master if the peer is not PeerOK by a transition to state 230. One of the controllers M1, M2 can also request to become master through operator request or a protective (out of bounds) condition. The WantToBeMaster signal is used to trigger the selector 150 that is a separate piece of hardware.

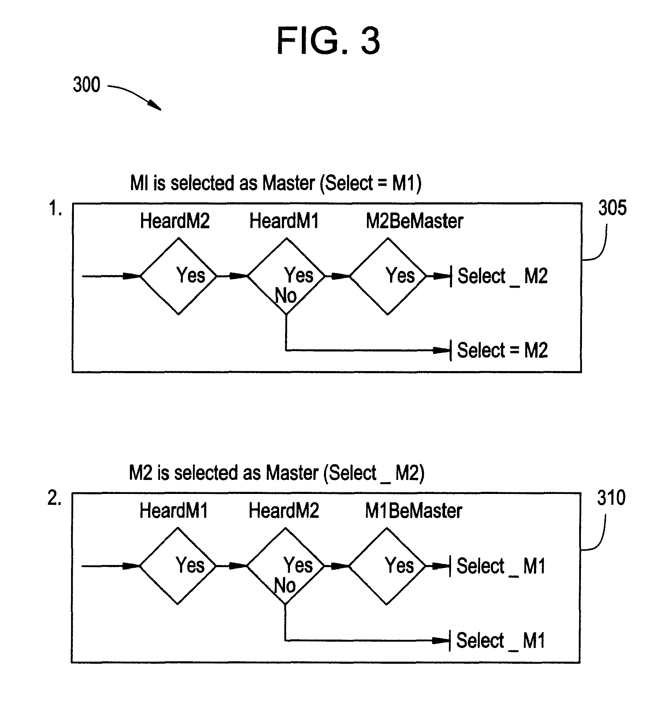

FIG. 3 illustrates a state diagram 300 depicting selector state machine logic in accordance with example embodiments. As described herein, the selector 150 is a piece of hardware that controls the power relay 160 that ultimately connects power converters for the controllers M1, M2 to the exciter field of the generator system. The selector 150 holds the controller M1, M2 state of the system 100 (i.e., controller M1 or controller M2 is the system 100 master). In state 305, controller M1 is selected as master, but a transition to controller M2 as master occurs based on the controller M2 is heard by the selector 150 and either controller M1 is not heard for controller M2 requests to become master as described herein. Similarly, in state 310, controller M2 is selected as master, but a transition to controller M1 as master occurs based on the controller M1 is heard by the selector 150 and either controller M2 is not heard for controller M1 requests to become master as described herein.

As described herein, the system 100 chooses between the analog inputs 105, 106 data if there is a discrepancy. There are various examples in which the choice of correctness when data differences between the peers (i.e., controllers M1, M2). The following discussion describes several examples. For purposes of discussion, one controller can be referred to as "self", and the other "peer". It will be appreciated that there are several other example contemplated, and that the following examples are only illustrative and may be expanded to other signals.

Example 1: For transformer (PT and CT) feedbacks, regardless of the value of the peer, a significant dc component is not a normal event and can constitute an instrumentation problem. On disagreement in magnitude and following a time delay: 1) Generator voltage magnitude, 2) Line/extra voltage magnitude, or 3) Generator current magnitude, a negative sequence component can be examined and a high value shall indicate a problem.

Example 2: An estimate of regulator voltage (if a master) can be formed by the product of firing command and dc link voltage measurement. Regulator voltage minus the estimate forms an error signal conditional on cell gating active. On disagreement of regulator voltage by more than 10% nominal dc link: 1) If a master and a delay of 100ms and an error signal (>10%), or 2) If a backup and a delay of 200ms and an error signal from the master (<10%), then indicate a problem. For bridge malfunction (e.g., gating etc), if a master and an error signal (>10%) indicate a problem. On disagreement of regulator current by more than 10% shunt rating: 1) Run a current model based on regulator voltage, exciter resistance, and exciter time constant, and 2) Use a value of pre-disagreement current to initialize the current state variable, and 3) Form a voted value of self, peer, and modeled current, and 4) Compare self to the voted current to form an error, indicate a problem with a high error signal (>10% shunt).

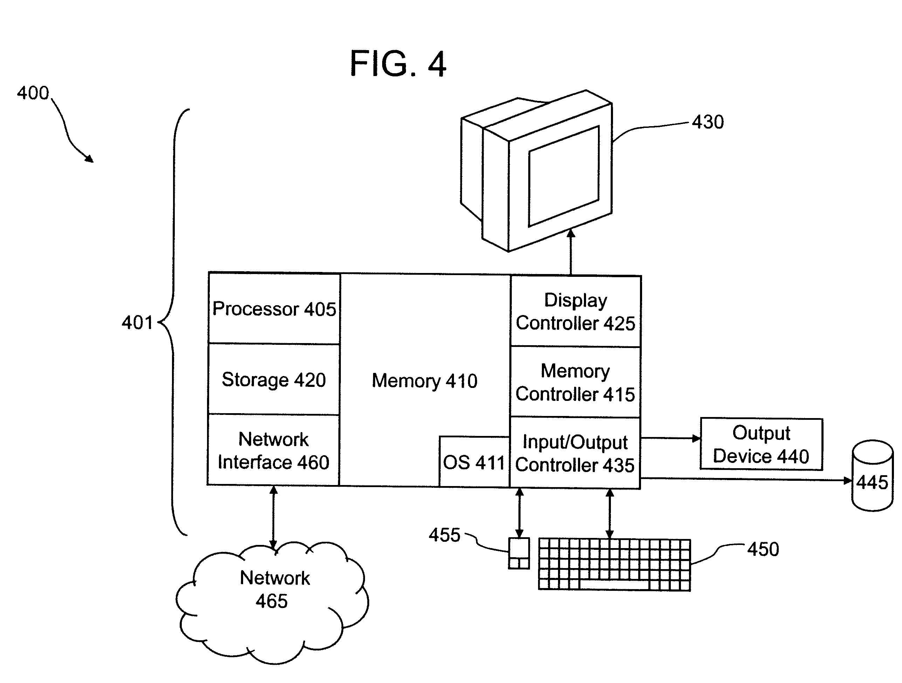

As described herein, each controller M1, M2 includes a processor, which can be part of an overall computer system. FIG. 4 illustrates an example embodiment of a system 400 that can be implemented with the controllers M1, M2. The methods described herein can be implemented in software (e.g., firmware), hardware, or a combination thereof. In example embodiments, the methods described herein are implemented in software, as an executable program, and is executed by a special or general-purpose digital computer, such as a personal computer, workstation, minicomputer, or mainframe computer. The system 400 therefore includes general-purpose computer 401.

In example embodiments, in terms of hardware architecture, as shown in FIG. 4, the computer 401 includes a processor 405, memory 410 coupled to a memory controller 415, and one or more input and/or output (I/O) devices 440, 445 (or peripherals) that are communicatively coupled via a local input/output controller 435. The input/output controller 435 can be, but is not limited to, one or more buses or other wired or wireless connections, as is known in the art. The input/output controller 435 may have additional elements, which are omitted for simplicity, such as controllers, buffers (caches), drivers, repeaters, and receivers, to enable communications. Further, the local interface may include address, control, and/or data connections to enable appropriate communications among the aforementioned components.

The processor 405 is a hardware device for executing software, particularly that stored in memory 410. The processor 405 can be any custom made or commercially available processor, a central processing unit (CPU), an auxiliary processor among several processors associated with the computer 401, a semiconductor based microprocessor (in the form of a microchip or chip set), a macroprocessor, or generally any device for executing software instructions.

The memory 410 can include any one or combination of volatile memory elements (e.g., random access memory (RAM, such as DRAM, SRAM, SDRAM, etc.)) and nonvolatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 410 may incorporate electronic, magnetic, optical, and/or other types of storage media. Note that the memory 410 can have a distributed architecture, where various components are situated remote from one another, but can be accessed by the processor 405.

The software in memory 410 may include one or more separate programs, each of which comprises an ordered listing of executable instructions for implementing logical functions. In the example of FIG. 4, the software in the memory 410 includes the dual controller generator regulating methods described herein in accordance with example embodiments and a suitable operating system (OS) 411. The OS 411 essentially controls the execution of other computer programs, such the dual controller generator regulating systems and methods as described herein, and provides scheduling, input-output control, file and data management, memory management, and communication control and related services.

The dual controller generator regulating methods described herein may be in the form of a source program, executable program (object code), script, or any other entity comprising a set of instructions to be performed. When a source program, then the program needs to be translated via a compiler, assembler, interpreter, or the like, which may or may not be included within the memory 410, so as to operate properly in connection with the OS 411. Furthermore, the dual controller generator regulating methods can be written as an object oriented programming language, which has classes of data and methods, or a procedure programming language, which has routines, subroutines, and/or functions.

In example embodiments, a conventional keyboard 450 and mouse 455 can be coupled to the input/output controller 435. Other output devices such as the I/O devices 440, 445 may include input devices, for example but not limited to a printer, a scanner, microphone, and the like. Finally, the I/O devices 440, 445 may further include devices that communicate both inputs and outputs, for instance but not limited to, a network interface card (NIC) or modulator/demodulator (for accessing other files, devices, systems, or a network), a radio frequency (RF) or other transceiver, a telephonic interface, a bridge, a router, and the like. The system 400 can further include a display controller 425 coupled to a display 430. In example embodiments, the system 400 can further include a network interface 460 for coupling to a network 465. The network 465 can be an IP-based network for communication between the computer 401 and any external server, client and the like via a broadband connection. The network 465 transmits and receives data between the computer 401 and external systems. In example embodiments, network 465 can be a managed IP network administered by a service provider. The network 465 may be implemented in a wireless fashion, e.g., using wireless protocols and technologies, such as WiFi, WiMax, etc. The network 465 can also be a packet-switched network such as a local area network, wide area network, metropolitan area network, Internet network, or other similar type of network environment. The network 465 may be a fixed wireless network, a wireless local area network (LAN), a wireless wide area network (WAN) a personal area network (PAN), a virtual private network (VPN), intranet or other suitable network system and includes equipment for receiving and transmitting signals.

If the computer 401 is a PC, workstation, intelligent device or the like, the software in the memory 410 may further include a basic input output system (BIOS) (omitted for simplicity). The BIOS is a set of essential software routines that initialize and test hardware at startup, start the OS 411, and support the transfer of data among the hardware devices. The BIOS is stored in ROM so that the BIOS can be executed when the computer 401 is activated.

When the computer 401 is in operation, the processor 405 is configured to execute software stored within the memory 410, to communicate data to and from the memory 410, and to generally control operations of the computer 401 pursuant to the software. The dual controller generator regulating methods described herein and the OS 411, in whole or in part, but typically the latter, are read by the processor 405, perhaps buffered within the processor 405, and then executed.

When the systems and methods described herein are implemented in software, as is shown in FIG. 4, the methods can be stored on any computer readable medium, such as storage 420, for use by or in connection with any computer related system or method.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

In example embodiments, where the dual controller generator regulating methods are implemented in hardware, the dual controller generator regulating methods described herein can implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

Technical advantages include but are not limited to providing a dual controller system with the performance of a triple control system, reducing hardware costs by removing a third controller, improving reliability by reducing hardware, and implementing computer algorithms to resolve differences in opinions between the two controls that inevitably occur during hardware failures. The dual controller system therefore achieves TMR performance, with lower cost, higher MTBF, and smaller size.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A regulating system (100), comprising:
a first controller configured to receive analog input (105, 106)and discrete input (110, 111);
a second controller communicatively coupled to the first controller, and configured to receive analog input (105, 106) and discrete input (110, 111);
a selector (150) communicatively coupled to the first controller and second controller and configured to select either one of the first controller and the second controller as a master for the regulating system (100); and
state logic residing on each of the first controller and second controller to determine which of the first and second controller is the master.

2. The system (100) as claimed in Claim 1 further comprising:
residing on each of the first controller and second controller, an analog problem resolver (130) configured to determine signal health of the respective first controller and second controller.

3. The system (100) as claimed in Claim 2 wherein the analog problem resolver (130) determines the signal health of the respective first controller and second controller in response to a disagreement about an analog input (105, 106) of the first controller and an analog input (105, 106) of the second controller.

4. The system (100) as claimed in Claim 1, 2 or 3, further comprising:
residing on each of the first controller and second controller, application decision logic (140, 140) configured to resolve a discrete input (110, 111) for the first controller and a discrete input (110, 111) for the second controller in response to a discrepancy between the discrete input (110, 111) for the first controller and the discrete input (110, 111) for the second controller.

5. The system (100) as claimed in any one of Claims 1 to 4, further comprising:
residing on each of the first controller and second controller, boundary transfer logic (135, 136) configured to transfer signals from at least one of the first controller and second controller in response to an agreement between an analog input (105, 106) of the first controller and an analog input (105, 106) of the second controller.

6. The system (100) as claimed in any one of Claims 1 to 5, wherein the first controller and the second controller are configured to exchange state information between the first controller and the second controller.

7. The system (100) as claimed in Claim 6 wherein the at least one of the first controller and the second controller is configured to, in response to at least one of the first controller and the second controller determining that the at least one of the first controller and the second controller is not healthy, the at least one of the first controller and the second controller is configured to communicate an unhealthy signal to the other of the at least one of the first controller and the second controller.

8. The system (100) as claimed in Claim 7 wherein the at least one of the first controller and the second controller is configured to, in response to the at least one of the first controller and the second controller receiving a state communication that the other of the at least one of the first controller and the second controller is unhealthy, the at least one of the first controller and the second controller is configured to request to become a master of the system.

9. The system (100) as claimed in Claim 6, 7 or 8, wherein in response to an analog input for the first controller and an analog input for the second controller agreeing, and being in an out of boundary condition, at least one of the first controller and the second controller is configured to request to become a master of the system.

10. The system (100) as claimed in any one of Claims 1 to 9, wherein the selector (150) includes selector state machine logic configured to hold a controller state for each of the first controller and second controller.

11. The system as claimed in any one of Claims 1 to 10, wherein at least one of the first controller and the second controller is a master controller and at least one of the first controller and the second controller is a backup controller;

12. The system as claimed in Claim 11 wherein:
at least one of the first controller and the second controller is configured to become the master in response to a failure of at least one of the first controller and the second controller failing to receive communications from the other of the first controller and the second controller; and/or
at least one of the first controller and the second controller becomes the master in response to an agreement of an analog input for the first controller and an analog input for the second controller and an out of boundary condition for both the analog input for the first controller and the analog input for the second controller; and/or
at least one of the first controller and the second controller becomes the backup in response to a communication of an unhealthy status.

13. A method for transferring state machine logic in a regulating system (100), the method comprising:
in response to being a master of the system and having analog inputs (105, 100), detecting an unhealthy status;
communicating the unhealthy status to a backup controller and to a selector (150) that switches the backup controller to a backup status and a master status;
in response to being a backup of the system and receiving an unhealthy status from the backup controller, requesting to become a master of the system; and
in response to being a backup of the system, identifying that the analog inputs agree with analog inputs for a master of the system, and identifying an out of boundary conditions of the analog inputs and the analog inputs of the master for the system, requesting to become master of the system.

14. The method as claimed in Claim 13 further comprising receiving a master status state.

15. The method as claimed in Claim 13 or Claim 14, further comprising receiving a backup status state.

16. A computer program product for transferring state machine logic in a regulating system (100), the computer program product including a non-transitory computer readable medium storing instructions for causing a computer to implement a method as defined in any one of claims 12 to 14.
